**Europäisches Patentamt**

**European Patent Office**

**Office européen des brevets**

(19)

(11) Veröffentlichungsnummer : **0 193 802**
**B1**

(12) **EUROPÄISCHE PATENTSCHRIFT**

(45) Veröffentlichungstag der Patentschrift :
**19.10.88**

(21) Anmeldenummer : **86102210.1**

(22) Anmeldetag : **20.02.86**

(51) Int. Cl.⁴ : **F 16 H   7/08**, F 16 C  27/06

(54) **Spann- oder Gleitschiene für Ketten von Kettentrieben.**

(30) Priorität : **21.02.85 DE 3506010**

(43) Veröffentlichungstag der Anmeldung :
**10.09.86 Patentblatt 86/37**

(45) Bekanntmachung des Hinweises auf die Patenterteilung : **19.10.88 Patentblatt 88/42**

(84) Benannte Vertragsstaaten :
**AT BE CH DE FR GB IT LI LU NL SE**

(56) Entgegenhaltungen :
**DE-A- 2 333 688**
**DE-A- 3 049 106**
**DE-A- 3 343 697**
**DE-A- 3 344 050**
**DE-A- 3 400 910**
**DE-A- 3 428 252**
**DE-C- 2 744 700**
**DE-U- 1 724 655**
**DE-U- 7 123 773**
**FR-A- 2 276 514**
**FR-A- 2 298 687**
**GB-A-   591 082**
**GB-A-   591 083**
**GB-A-   742 092**
**GB-A- 1 402 858**
**GB-A- 1 451 195**
**GB-A- 2 020 379**
**US-A- 4 141 605**
**US-A- 4 268 094**

(73) Patentinhaber : **Feldmühle Aktiengesellschaft**
**Fritz-Vomfelde-Platz 4**
**D-4000 Düsseldorf 1 (DE)**

(72) Erfinder : **Habel, Gernot**
**Rossbergstrasse 5**
**D-7310 Plochingen (DE)**

## Beschreibung

Die Erfindung betrifft eine Spann- oder Gleitschiene für Ketten von Kettentrieben gemäß dem Oberbegriff von Anspruch 1, wie sie aus der FR-A-2 298 687 bekannt ist.

Spann- oder Gleitschienen werden ganz generell dort eingesetzt, wo Kettentriebe Verwendung finden. Ein bevorzugtes Einsatzgebiet ist jedoch das Gebiet der Kraftfahrzeugmotoren, bei denen die Nockenwelle über eine Steuerkette angetrieben wird. Die Kette muß dabei unter einer definierten Spannung gehalten werden, außerdem ist es Aufgabe der Spann- oder Gleitschiene, Toleranzen und das bei längerem Gebrauch auftretende Nachlängen der Kette auszugleichen. Herkömmliche Gleitschienen bestehen entweder komplett aus einem elastischen Material, oder aber wie die Spannschienen aus Metall, wobei es sich bei diesem Metall sowohl um Gußlegierungen, beispielsweise Aluminiumlegierungen, als auch um Bleche in Form gestanzter Profile handeln kann, die dann im Bereich der Gleitfläche mit einem elastischen Gleitbelag, wie z. B. bei der DE-A-23 33 688 und dem DE-U-71 23 773, versehen sind. Auch ist aus der DE-A-24 31 425 eine Spannschiene bekannt, auf deren Träger ein hitzebeständiger Kunststoff, z. B. ein Polyamid, aufgebracht ist.

Aus der GB-A-591 083 sowie dem DE-U-17 24 655 sind ferner Kettenspanner bekannt, bei denen die dämpfende Gummischicht mit einem Stahlband als Schutzabdeckung versehen ist.

Im Laufe der Zeit erfolgt bei diesen Konstruktionen ein sogenanntes Einlaufen der Kette, d. h. die Stege einer Rollenkette schneiden insbesondere im Anlaufbereich der Kette in das Material ein und führen, abhängig von der Belastung, nach längerer oder kürzerer Zeit zur Zerstörung der Schutzabdeckung bzw. des elastischen Belags der Gleitfläche.

Mit der DE-A-30 49 106 wurde vorgeschlagen, den Anlaufbereich der Kette elastisch nachgebend auszuführen, d. h. in diesem Bereich nur elastisches Material einzusetzen, das zusätzlich die Form einer Feder aufweist und erst im Anschluß daran den Träger mit dem Belag aus elastischem Material anzuordnen.

Der elastische Bereich federte beim Auftreffen der Kette weg, wenn das Material elastisch genug war, das eigentliche Spannen der Kette trat dadurch in einem späteren Bereich des Kettenspanners auf, wodurch sich die vom Verschleiß angegriffene Anlaufzone weiter zur Mitte des Kettenspanners verlagerte.

Der vorliegenden Erfindung liegt damit die Aufgabe zugrunde, eine Spann- oder Gleitschiene zu schaffen, die eine erheblich höhere Lebensdauer aufweist, ohne daß die Dämpfungsfunktion beeinträchtigt ist und bei der der Verschleiß der Gleitfläche zumindest im Bereich des Kettenanlaufs auf Werte nahe 0 reduziert ist.

Diese Aufgabe wird bei einer Spann- oder Gleitschiene gemäß Oberbegriff dadurch gelöst, daß zumindest im Anlaufbereich der Kette das elastische Material als Schutzabdeckung eine Panzerung aus einem gesinterten Hartstoff mit niedrigem Reibungskoeffizienten aufweist, der in Form von Segmenten in das elastische Material eingebettet ist. Vorteilhaft erstreckt sich dabei die Hartstoffpanzerung über eine Länge von 30 bis 100 % der Gleitfläche.

Als Hartstoffe im Sinne der Erfindung sind dabei Hartmetalle aufzufassen sowie die Sinterprodukte von Nitriden, Karbiden, Siliziden und Boriden sowie die unter dem Sammelbegriff Oxidkeramik bekannten Materialien. Als oxidkeramisches Material wird bei der vorliegenden Erfindung das an sich bereits bekannte teilstabilisierte Zirkoniumoxid eingesetzt, aber auch Aluminiumoxid und Zirkoniumoxid enthaltende Mischungen, wie sie z. B. in der DE-C-27 44 700 beschrieben sind, ferner können Siliziumkarbid, Siliziumnitrid oder Siliziumoxinitrid Verwendung finden. Beide Stoffgruppen weisen außer ihrer Härte, verglichen mit anderen Materialien, eine relativ hohe Zähigkeit auf, so daß sie einer Verformung, wie sie durch von der Kette übertragene Stöße auftreten kann, besser als die anderen aufgezählten Materialien widerstehen.

Die Erfindung sieht ferner vor, daß der Hartstoff in Form von Segmenten in das elastische Material eingebettet ist, wobei zweckmäßig ein Hartstoffsegment so angeordnet ist, daß der Auftreffpunkt der Kette im mittleren Drittel der Segmentlänge liegt. Die Aufteilung der Panzerung in einzelne Hartstoffsegmente gestattet auf der einen Seite eine wirtschaftlichere Fertigung der einzelnen Hartstoffteile, da diese in Segmentform zu beliebig langen Bögen zusammengesetzt werden können. Auf der anderen Seite ergibt sich als weiterer Vorteil, daß durch diese Aufteilung in Segmente auch solche Materialien eingesetzt werden können, die von Hause aus eine höhere Sprödigkeit als Zirkonoxid oder Siliziumnitrid aufweisen. Insbesondere ist es dadurch möglich, die recht preisgünstige Aluminiumoxidsinterkeramik zu verwenden, die zwar eine hervorragende Druckbelastbarkeit aufweist, aber gegen Biegung äußerst empfindlich ist.

Dadurch, daß der Auftreffpunkt der Kette im mittleren Drittel einer Segmentlänge liegt, ist auch beim Einsatz von Segmenten sichergestellt, daß die Kette nicht auf eine Kante eines Segmentes aufläuft und dadurch ein kontinuierlicher Verschleiß an der Kette auftritt.

Gemäß einer vorteilhaften Ausgestaltung der Erfindung erstreckt sich der Hartstoff gegen die Kettenlaufrichtung über den Anlaufbereich hinaus, d. h., daß die Kette nicht auf eine Hartstoffkante auflaufen kann, sondern unter einem sehr spitzen Winkel auf die Fläche des Hartstoffes aufläuft. Dadurch wird eine Beschädigung der Kette verhindert.

Die Dicke der Hartstoffschicht beträgt gemäß einer bevorzugten Ausgestaltung der Erfindung 1 bis 3 mm. Bei einer Dicke unter 1 mm ist bereits eine Beschädigungsgefahr der Hartstoffschicht durch zu starke Schläge der Kette gegeben. Oberhalb 3 mm ergeben sich keine Vorteile, es tritt nur ein erhöhter Materialverbrauch auf, der unerwünscht ist.

Eine sehr vorteilhafte Ausgestaltung der Erfindung sieht vor, daß als elastisches Material ein Elastomer mit einer Härte zwischen 60 und 70 Shore A eingesetzt ist. Die Schichtdicke dieses Elastomers ist gemäß einer weiteren bevorzugten Ausgestaltung der Erfindung 2 bis 10 mm. Der Härtebereich von 60 bis 75 Shore A ergibt in Verbindung mit der Panzerung eine optimale Dämpfung der Kettenschwingung, ohne daß der Hartstoff einer starken Biegebeanspruchung ausgesetzt wird. D. h. unterhalb einer Härte von 60 Shore A besteht zumindest bei spröderen Hartstoffmaterialien die Gefahr, daß aufgrund des Ausweichens des elastischen Materials in Teilbereichen ein Bruch der Hartstoffschicht auftritt. Eine Härte oberhalb 75 Shore A führt hingegen nicht mehr zur erforderlichen Dämpfung. Ähnlich verhält es sich mit der Dicke der Elastomerschicht. Als Mindestdicke zwischen Panzerung und Trägermaterial ist 2 mm vorzusehen. Diese 2 mm Stärke kann sich auch im Auslaufbereich des Trägers befinden, in dem keine panzernde Abdeckung mehr vorhanden ist. Die Maximalstärke ist auf 10 mm begrenzt, wobei hier allerdings nur Materialverbrauch und Konstruktionsmaße, also der Platzbedarf, ausschlaggebend sind.

Gemäß einer bevorzugten Ausführungsform der vorliegenden Erfindung besteht das elastische Material aus öl- und temperaturbeständigen Fluor enthaltenden Elastomeren, wobei Fluorsilikonkautschuk, Copolymere des Vinylidenfluorids und des Chlortrifluoräthylens bevorzugt sind. Als ganz besonders geeignet haben sich Elastomere auf Basis Vinylidenfluorid-Hexafluorpropylen erwiesen. Mischungen der genannten Komponenten sind ebenfalls gut geeignet. Die genannten Elastomere garantieren unter dem Einfluß der in Motoren üblichen Öltemperaturen im Bereich von ca. 150 Grad C und bei Einwirkung der üblichen Motoröle eine gute Verbindung zwischen Hartstoff und Träger sowie eine gute Dämpfung der Kettenschwingung.

Die Erfindung wird nachstehend anhand der Zeichnungen beschrieben.

Die Fig. 1 und 2 zeigen die Vorderansicht,
die Fig. 3 bis 5 die Draufsicht und
die Fig. 6 und 7 die Seitenansicht verschiedener Ausführungsformen der erfindungsgemäßen Spann- oder Gleitschiene.

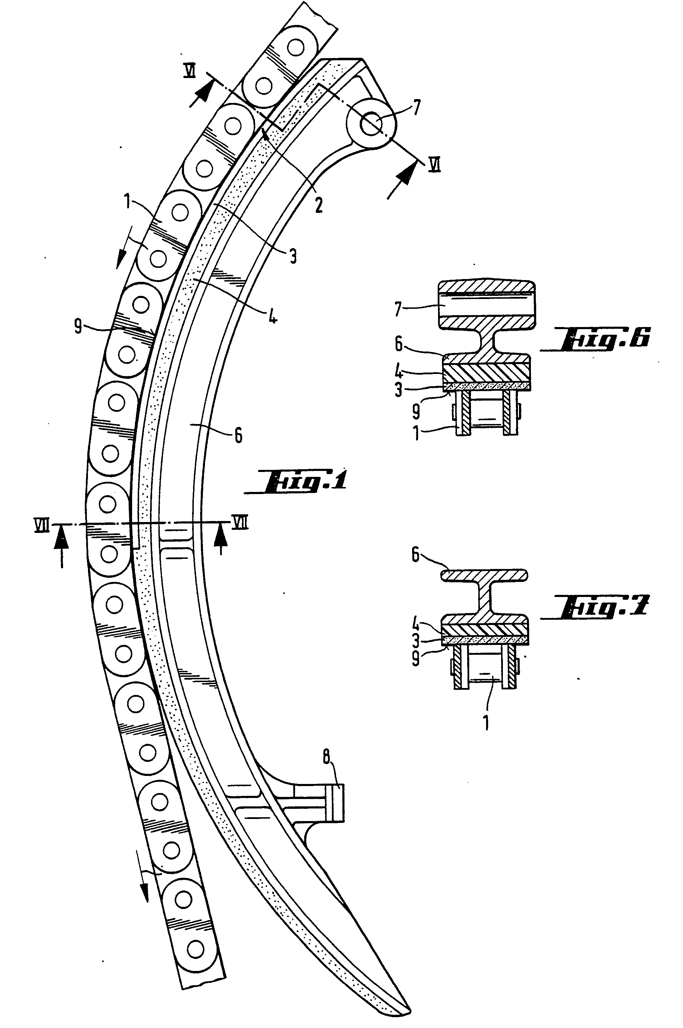

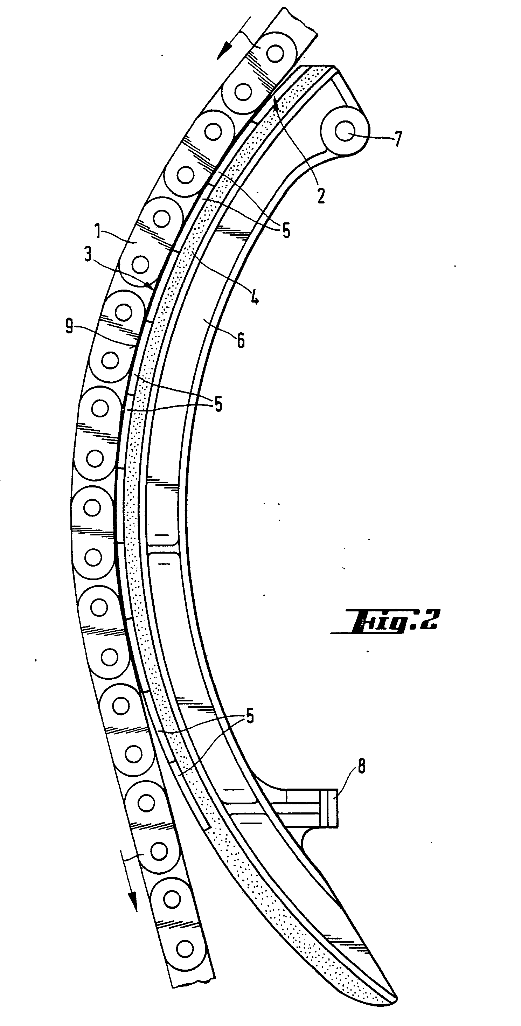

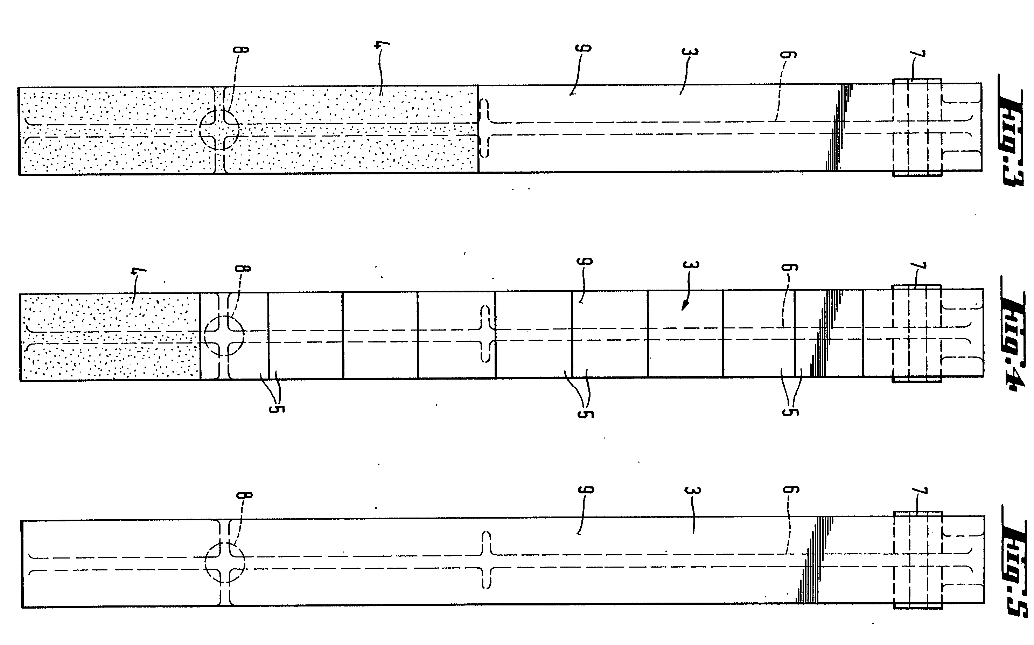

Eine als Rollenkette ausgeführte Kette 1 trifft in Höhe eines Lagers 7, also im Anlaufbereich 2, auf eine Spann- oder Gleitschiene auf. Die Spann- oder Gleitschiene ist in diesem Bereich mit einer Panzerung 3 versehen, unter der sich ein elastisches Material 4 befindet, das die Panzerung 3 mit einem Träger 6 verbindet. Der Träger 6 besteht aus einer Aluminiumgußkonstruktion, die schwenkbar im Lager 7 gelagert ist und die durch eine nicht dargestellte Verstellung, die an einem Ansatz 8 der Spann- oder Gleitschiene angreift, in ihrer Lage zur Kette 1 verstellt werden kann. Die Panzerung 3 ist, wie der Figur 2 zu entnehmen, in einzelne Segmente 5 unterteilt und erstreckt sich in diesem Fall über ca. zwei Drittel der Länge der Gleitfläche 9, wodurch auch bei starkem Nachspannen der Spann- oder Gleitschiene die Kette 1 über einen großen Bereich mit der Panzerung 3 in Eingriff steht. Bei den Figuren 1 und 3 ist lediglich ein verlängerter Anlaufbereich 2 mit einer Panzerung 3 versehen, wobei die Panzerung 3 gemäß Figuren 1 und 3 einstückig ausgeführt ist. Gemäß Figur 5 erstreckt sich die Panzerung 3 über die gesamte Länge der Gleitfläche 9 und ist ebenfalls aus einem Stück gefertigt. Aus den Figuren 6 und 7 geht hervor, daß das elastische Material 4 im Anlaufbereich 2 der Kette 1 stärker ausgeführt ist als im Endbereich der Panzerung 3, wo eine geringere Belastung auftritt.

## Patentansprüche

1. Spann- oder Gleitschiene für Ketten von Kettentrieben, bestehend aus einem Träger und einem auf dessen Gleitfläche angeordneten elastischen Material, wobei die Gleitfläche zumindest teilweise mit einer verschleißmindernden Schutzabdeckung versehen ist, die mit der zu spannenden Kette in Eingriff steht, dadurch gekennzeichnet, daß zumindest im Anlaufbereich (2) der Kette (1) das elastische Material (4) als Schutzabdeckung eine Panzerung (3) aus einem gesintertem Hartstoff mit niedrigem Reibungskoeffizienten aufweist, der in Form von Segmenten (5) in das elastische Material (4) eingebettet ist.

2. Spann- oder Gleitschiene nach Anspruch 1, dadurch gekennzeichnet, daß sich die Panzerung (3) aus Hartstoff über 30 bis 100 % der Länge der Gleitfläche erstreckt.

3. Spann- oder Gleitschiene nach einem der Ansprüche 1 und 2, dadurch gekennzeichnet, daß sich die Panzerung (3) aus Hartstoff gegen die Kettenlaufrichtung über den Anlaufbereich (2) hinaus erstreckt.

4. Spann- oder Gleitschiene nach einem der Ansprüche 1 bis 3, dadurch gekennzeichnet, daß das erste Hartstoffsegment so angeordnet ist, daß der Auftreffpunkt der Kette (1) im mittleren Drittel der Segmentlänge liegt.

5. Spann- oder Gleitschiene nach einem der Ansprüche 1 bis 4, dadurch gekennzeichnet, daß die Dicke der Panzerung (3) 1 bis 3 mm beträgt.

6. Spann- oder Gleitschiene nach einem der Ansprüche 1 bis 5, dadurch gekennzeichnet, daß der Hartstoff aus teilstabilisiertem Zirkonoxid oder einer Aluminiumoxid und Zirkonoxid enthaltenden Mischung besteht.

7. Spann- oder Gleitschiene nach einem der Ansprüche 1 bis 6, dadurch gekennzeichnet, daß der Hartstoff aus Siliziumnitrid, Siliziumkarbid oder einer Mischung dieser Stoffe besteht.

8. Spann- oder Gleitschiene nach einem der Ansprüche 1 bis 7, dadurch gekennzeichnet, daß das elastische Material (4) ein Elastomer mit einer Härte zwischen 60 und 65 Shore A ist.

9. Spann- oder Gleitschiene nach einem der Ansprüche 1 bis 8, dadurch gekennzeichnet, daß die Dicke der Elastomerschicht 2 bis 10 mm beträgt.

10. Spann- oder Gleitschiene nach einem der Ansprüche 1 bis 9, dadurch gekennzeichnet, daß das Elastomer öl- und temperaturbeständig ist, aus einem Vinylidenfluoridcopolymeren, einem Chlortrifluoräthylencopolymeren, einem Fluorsilikonkautschuk, einem Copolymeren auf Basis von Vinylidenfluorid-Hexafluorpropylen oder einer Mischung dieser Komponenten besteht.

## Claims

1. A tensioning or slide rail for the chains of chain drives, consisting of a support and a resilient material arranged on the sliding surface thereof, the sliding surface being provided at least in part with a wear-reducing protective covering which is engaged by the chain being tensioned, characterised in that at least in the area of first contact (2) of the chain (1) the resilient material (4) has as protective covering a cladding (3) made of a sintered mechanically resistant material with a low coefficient of friction, which is embedded in the form of segments (5) in the resilient material (4).

2. A tensioning or slide rail according to Claim 1, characterised in that the cladding (3) of mechanically resistant material extends over from 30 to 100 % of the length of the sliding surface.

3. A tensioning or slide rail according to one of Claims 1 and 2, characterised in that the cladding (3) of mechanically resistant material extends against the direction of travel of the chain beyond the area of first contact (2).

4. A tensioning or slide rail according to one of Claims 1 to 3, characterised in that the first segment of mechanically resistant material is so arranged that the point of contact of the chain (1) lies in the middle third of the length of the segment.

5. A tensioning or slide rail according to one of Claims 1 to 4, characterised in that the thickness of the cladding (3) is from 1 to 3 mm.

6. A tensioning or slide rail according to one of Claims 1 to 5, characterised in that the mechanically resistant material consists of partially stabilised zirconium oxide or of a mixture containing aluminium oxide and zirconium oxide.

7. A tensioning or slide rail according to any one of Claims 1 to 6, characterised in that the mechanically resistant material consists of silicon nitride, silicon carbide or a mixture of these materials.

8. A tensioning or slide rail according to one of Claims 1 to 7, characterised in that the resilient material (4) is an elastomer with a hardness of between 60 and 65 Shore A.

9. A tensioning or slide rail according to one of Claims 1 to 8, characterised in that the thickness of the elastomer layer is from 2 to 10 mm.

10. A tensioning or slide rail according to one of Claims 1 to 9, characterised in that the elastomer is oil-resistant and temperature-resistant, and consists of a vinylidene fluoride copolymer, a chlorotrifluorethylene copolymer, a fluorosilicone rubber, a copolymer based on vinylidene fluoride-hexafluoropropylene, or a mixture of these components.

## Revendications

1. Rail de tension ou de glissement pour des chaînes de transmissions par chaîne, composé d'un support et d'une matière élastique disposée sur la surface de glissement de rail, la surface de glissement étant pourvue au moins partiellement d'un recouvrement de protection qui diminue l'usure et est en contact avec la chaîne à tendre, caractérisé en ce qu'au moins dans la zone d'arrivée (2) de la chaîne (1) sur le rail, la matière (4) élastique présente comme recouvrement de protection un blindage (3) en matière dure frittée, à faible coefficient de frottement, qui est encastrée sous forme de segments (5) dans la matière (4) élastique.

2. Rail de tension ou de glissement selon la revendication 1, caractérisé en ce que le blindage (3) en matière dure s'étend sur 30 à 100 % de la longueur de la surface de glissement.

3. Rail de tension ou de glissement selon l'une quelconque des revendications 1 et 2, caractérisé en ce que le blindage (3) en matière dure s'étend au-delà de la zone d'arrivée (2), dans le sens contraire au sens de déplacement de la chaîne.

4. Rail de tension ou de glissement selon l'une quelconque des revendications 1 à 3, caractérisé en ce que le premier segment de matière dure est disposé de telle façon que le point de contact avec la chaîne (1) se trouve dans le tiers médian de la longueur du segment.

5. Rail de tension ou de glissement selon l'une quelconque des revendications 1 à 4, caractérisé en ce que l'épaisseur du blindage (3) est de 1 à 3 mm.

6. Rail de tension ou de glissement selon l'une quelconque des revendications 1 à 5, caractérisé en ce que la matière dure est de l'oxyde de zirconium partiellement stabilisé ou un mélange contenant de l'alumine et de l'oxyde de zirconium.

7. Rail de tension ou de glissement selon l'une quelconque des revendications 1 à 6, caractérisé en ce que la matière dure est un nitrure de silicium, un carbure de silicium ou un mélange de ces substances.

8. Rail de tension ou de glissement selon l'une quelconque des revendications 1 à 7, caractérisé en ce que la matière (4) élastique est un élastomère d'une dureté comprise entre 60 et 65 Shore A.

9. Rail de tension ou de glissement selon l'une quelconque des revendications 1 à 8, caractérisé en ce que l'épaisseur de la couche élastomère est de 2 à 10 mm.

10. Rail de tension ou de glissement selon l'une quelconque des revendications 1 à 9, caractérisé en ce que l'élastomère résiste à l'huile et aux températures et est un copolymère de fluorure de vinylidène, un copolymère de trifluorochloréthylène, un caoutchouc fluorosilicone, un copolymère à base de fluorure de vinylidène/hexafluoropropylène ou un mélange de ces composants.

Fig.1

Fig.6

Fig.7

Fig.2

Fig.3    Fig.4    Fig.5